# EUROPEAN PATENT APPLICATION

(11) **EP 2 113 898 A1**
(43) Date of publication of application: **04.11.2009**
(21) Application number: 09158162.9
(22) Date of filing: 17.04.2009
(51) Int. Cl.: G09B 9/00

(54) **Training simulators for engineering projects**

(30) Priority: 29.04.2008 US 111446
(71) Applicant: General Electric Company, Schenectady, NY 12345 (US)
(72) Inventor: Minto, Kari Dean, Ballston Lake, NY 12019 (US); Synard, Clayton Joseph, Simpsonville, SC 29681 (US); Morton, Gregory John, Salem, VA 24154 (US); McKinley, Marc Harold, Roanake, VA 24014 (US)
(74) Representative: Bedford, Grant Richard

(57) **Abstract**

Methods and systems for providing a training simulator (325) for an engineering project are disclosed. A simulator operable to simulate the engineering project is provided. The simulator includes at least one component operable to simulate a control system (320) that controls one or more operations associated with the engineering project. A training simulator component is incorporated into the simulator. The training simulator component (325) is operable to facilitate the training of personnel on suitable operation of the engineering project.

## Description

The invention relates generally to training simulators, and more particularly to training simulators for engineering projects.

Intensive efforts are often expended during the development of large scale engineering projects such as, for example, power generation systems or power plants. In order to properly develop and test these large engineering projects, a variety of transient simulations may be utilized. These simulations may be utilized to resolve design and operability issues.

Custom engineering simulators may be specifically developed for a particular engineering project, such as for a particular integrated gasification combined cycle power system. In doing so, simulations may be developed for the various components of the engineering project, including the control system that will be utilized in the engineering project.

It may be very expensive and time consuming to develop a custom simulator for an engineering project. Over the course of several large engineering projects, a great amount of time, effort, and other resources may be expended in the development of various custom simulators.

Additionally, the simulators developed for engineering projects are often not suitable for operator training purposes. Typically, training simulators are developed separately from engineering simulators, duplicating cost and effort.

Accordingly, there exists a need for improved training simulators for large engineering projects. There also exists a need for training simulators that may be developed as an extension of simulators for engineering projects.

According to one embodiment of the invention, there is disclosed a method for providing a training simulator for an engineering project. A simulator operable to simulate the engineering project is provided. The simulator includes at least one component operable to simulate a control system that controls one or more operations associated with the engineering project. A training simulator component is incorporated into the simulator. The training simulator component is operable to facilitate the training of personnel on suitable operation of the engineering project.

According to another embodiment of the invention, there is disclosed a training simulator. The training simulator includes a plurality of networked computers, a plurality of memory devices, and a manager. The plurality of networked computers are operable to execute respective software components that facilitate the simulation of respective components of the engineering project and the execution of a training simulator for the engineering project. At least one respective memory device is associated with each of the plurality of networked computers. Each of the memory devices is operable to store simulation data that is shared among the plurality of memory devices. The manager is operable to initiate a training simulation of the engineering project by initiating the execution of the respective software components by the plurality of networked computers. The manager is further operable to manage the training simulation based at least in part on synchronizing the execution of the respective software components and updating at least a portion of the shared simulation data stored in the plurality of memory devices.

According to yet another embodiment of the invention, there is disclosed a system for providing a training simulator for an engineering project. The system includes an engineering simulator operable to simulate the engineering project and a training simulator component. The simulator includes at least one component operable to simulate a control system that controls one or more operations of the engineering project. The training simulator component is provided as an extension of the engineering simulator, and the training simulator component is operable to facilitate the training of personnel on suitable operation of the engineering project.

Other embodiments, aspects, features and advantages of the invention will become apparent to those skilled in the art from the detailed description, the accompanying drawings and the appended claims.

Having thus described aspects of the invention in general terms, reference will now be made to the accompanying drawings, which are not necessarily drawn to scale, and wherein:
FIG. 1A is a schematic diagram of one example of a system that may be utilized to simulate an engineering project, according to an illustrative embodiment of the invention.
FIG. 1B is a schematic diagram of another example of a system that may be utilized to simulate an engineering project, according to an illustrative embodiment of the invention.
FIG. 2 is a block diagram of one example of an architecture that may be utilized to simulate an engineering project, according to an illustrative embodiment of the invention.
FIG. 3 is a block diagram of one example of the components of a system utilized to simulate engineering projects and as a training simulator for the engineering projects, according to an illustrative embodiment of the invention.
FIG. 4 is a block diagram of one example of a control unit that may be utilized in accordance with various embodiments of the invention.
FIG. 5 is a flow chart of one example of a method for conducting a simulation of an engineering project, according to an illustrative embodiment of the invention.
FIG. 6 is a flow chart of one example of a method for managing a simulation of an engineering project, according to an illustrative embodiment of the invention.
FIG. 7 is a flow chart of one example of a method for debugging an engineering project, according to an illustrative embodiment of the invention.
FIG. 8 is a flow chart of one example of a method for conducting a training simulation for an engineering project, according to an illustrative embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Exemplary embodiments of the invention will hereinafter be described with reference to the figures, in which like numerals indicate like elements throughout the several drawings.

Disclosed are embodiments of systems and methods for simulating engineering projects and for providing training simulators for the engineering projects. More specifically, embodiments of systems and methods for simulating and providing training simulators for power plants and/or power systems such as, for example, integrated gasification combined cycle power plants and/or power systems are disclosed. In one embodiment, a plurality of network stations may be connected in a token ring configuration. One or more of the network stations may execute respective components of a simulation. One or more control stations may coordinate the execution of the simulation components by the other network stations. Additionally, one or more simulation variables and/or data values may be shared by each of the network stations utilizing reflective memory. A training simulator or training simulator component may be provided as an extension of a simulation of an engineering project.

One technical effect of some or all of the embodiments of the invention is to provide a simulator for engineering projects such as, for example, an integrated gasification combined cycle power plant. The simulator may be a flexible and scalable simulator for which hardware and/or software components may be provided in accordance with the specifications and/or requirements of the engineering project that is simulated. Additionally, the simulator may be extended to provide a training simulator for the engineering project that facilitates the training of personnel on the suitable or proper operation of the engineering project.

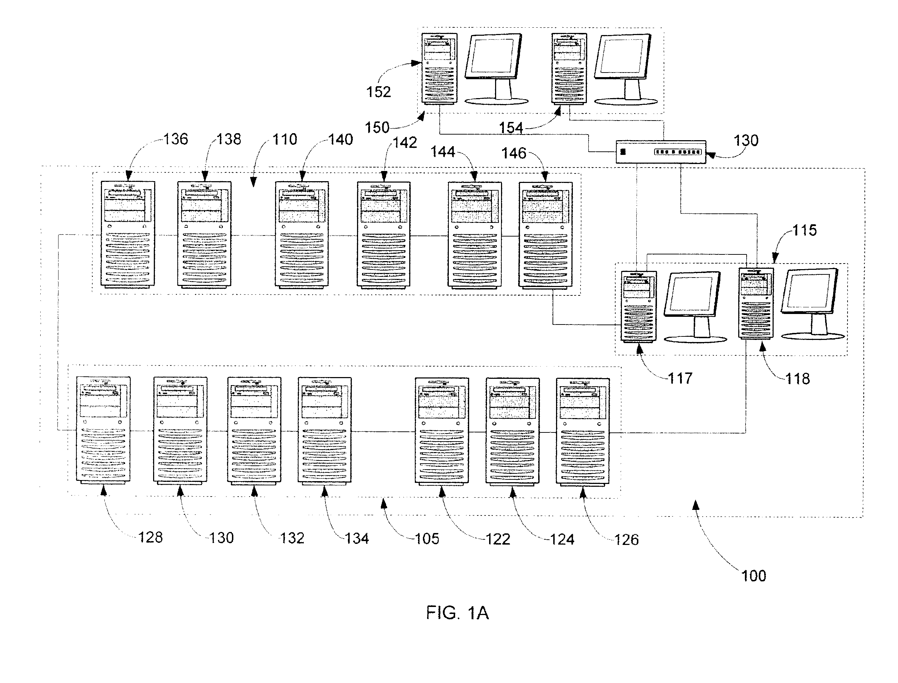

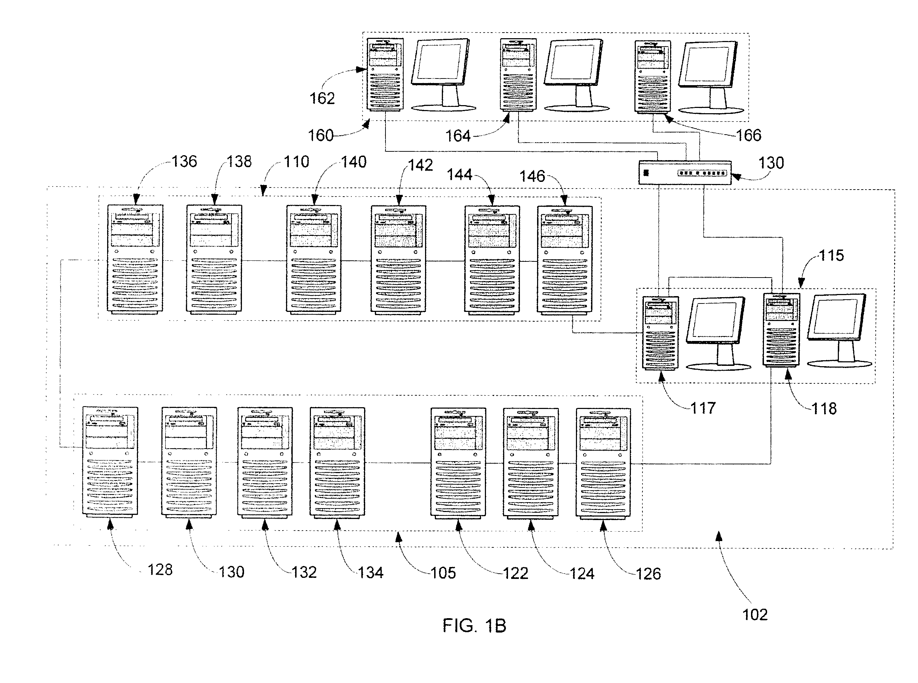

FIG. 1A is a schematic diagram of one example of a system 100 that may be utilized to simulate an engineering project, according to an illustrative embodiment of the invention. For example, the system 100 shown in FIG. 1 may be utilized to simulate an integrated gasification combined cycle power system. As used herein, the terms "system", "architecture", and "system architecture" may be used interchangeably. The system 100 may include at least an equipment simulation model 105, a controls simulation model 110, and an instructor station 115. The equipment simulation model 105, controls simulation model 110, and instructor station 115 may be in communication with one another via one or more suitable network connections such as, for example, wired network connections and/or wireless network connections.

According to an aspect of the invention, the equipment simulation model 105, controls simulation model 110, and instructor station 115 may be arranged in a suitable network configuration such as, for example, in a token ring network. An example token ring network is depicted in FIG. 1A. A token ring network may be achieved via a looped network connection between the various network components. One or more suitable network interface devices, such as one or more suitable network cards, may be included in each of the network devices in order to form the token ring network. Additionally, the token ring network may be formed in a daisy chain manner. By utilizing a token ring network configuration, data may be communicated sequentially from one network station to the next network station in the token ring. The data may be sequentially communicated until it has reached each network station in the token ring. The token ring network may be a relatively high speed, digital network. It will be appreciated that a wide variety of network configurations may be utilized in accordance with embodiments of the invention and that the depiction of a token ring network in FIG. 1A is merely one example of a suitable network configuration.

The instructor station 115 may control the simulation or management of an engineering project by the system 100. In other words, the instructor station 115 may control at least a portion of the operations of one or more of the other components of the system 100. As used herein, the terms "instructor station", "simulation executive," "executive," "manager", and "management station" may be utilized interchangeably. The instructor station 115 may manage, control, and/or coordinate the execution of a simulation by the system 100. A wide variety of simulation operations may be controlled and/or performed by the instructor station 115 such as, for example, an initialization of a simulation, an execution of a simulation, a pausing of a simulation, a forwards or backwards time stepping of a simulation, a saving of a simulation, and/or a restoration of a simulation to a predefined or stored state. Additionally, the instructor station 115 may manage simulation data and/or the states of various component programs that are utilized in a simulation.

The instructor station 115 may include one or more computers 117, 118. As used herein, the terms "computer", "personal computer", and "workstation" may be used interchangeably. Each of the one or more computers may be any suitable computing device or computer system configuration such as, for example, a personal computer, a hand-held computing device, a multiprocessor system, a microprocessor-based computer or computing system, a mini-computer, a mainframe computer, etc. As shown in FIG. 1A, the instructor station 115 may include at least two computers 117, 118; however, it will be understood that any number of computers may be included in the network station. According to an aspect of the invention, additional computers may be added to the instructor station 115 as desired to manage and/or control an engineering simulation. Similarly, computers may be removed from the instructor station 115 as desired. In this regard, the instructor station 115 may be scalable as needed for an engineering simulation.

At least one of the one or more computers 117, 118 included in the instructor station 115 may include one or more appropriate user interfaces and/or input/output devices as desired for certain embodiments of the invention. Appropriate user interfaces may include suitable devices such as, for example, a suitable computer monitor or other display. Appropriate input/output devices may include, but are not limited to, a keyboard, a mouse, a touch screen, a selectable display, a voice recognition device, a camera, etc.

Additionally, although FIG. 1A illustrates an instructor station that may manage and/or control the simulation of an engineering project by the system 100, it will be appreciated that, in certain embodiments of the invention, the management and/or control of a simulation may be performed by one or more of the other components of the system 100. It will further be appreciated that certain embodiments of the invention may not include an instructor station 115. For example, the system 100 may not include an instructor station 115 and the management of a simulation may be performed by one or more computers of the equipment simulation model 105. As another example, the management of a simulation may be performed by one or more computers of the controls simulation model 110. As another example, the management and/or control of a simulation may be distributed among various components of the system.

The instructor station 115 may be in communication with one or more of the other network stations via the token ring network. The instructor station 115 may communicate data and/or instructions onto the network via the token ring network switch 120. The communicated data and/or instructions may then be received at one or more of the other network stations. Similarly, the instructor station 115 may receive data from one or more of the other network stations via the token ring network switch 120.

Additionally, the instructor station 115 may be in communication with one or more devices and/or systems external to the token ring network. For example, as shown in FIG. 1A, the instructor station 115 may be in communication with an engineering room 150. For a simulation of an integrated gasification combined cycle power plant, the engineering room 150 may simulate an engineering room for the power plant that allows an engineer or other operative to view and adjust certain engineering aspects of the power plant. The engineering room 150 may include one or more computers, such as computers 152, 154. The one or more computers 152, 154 may be in communication with one another and/or with the instructor station 115 via a suitable network connection such as, for example, a wired connection or a wireless connection. As shown in FIG. 1A, the one or more computers 152, 154 of the engineering room 150 may be in communication with the instructor station 115 via an appropriate network switch 130; however, it will be appreciated that a wide variety of other connections may be utilized in accordance with embodiments of the invention.

As another example of an external system that may be in communication with an instructor station, such as instructor station 115, FIG. 1B illustrates an instructor station 115 that may be in communication with a main control room 160. FIG. 1B is a schematic diagram of another example of a system 102 that may be utilized to simulate an engineering project, according to an illustrative embodiment of the invention. The components of the system 102 illustrated in FIG. 1B may be substantially similar to those illustrated in the system 100 of FIG. 1A. However, the system 102 of FIG. 1B illustrates a main control room 160 as an external system rather than the engineering room 150 illustrated in FIG. 1A. It will be appreciated that the components of system 102 may be different than those of system 100.

With continued reference to the FIG. 1B, if a simulation of an integrated gasification combined cycle power plant is performed, the main control room 160 may simulate the main control room for the power plant. In this manner, the main control room 160 may allow a trainee, operator, or other individual to control the simulation of an engineering project in a similar manner to that in which an operator would control an actual power plant. Accordingly, the main control room 160 may be utilized in conjunction with a training simulator that is executed by the system 100.

Similar to the engineering room 150 shown in FIG. 1A, the main control room 160 may include one or more computers, such as computers 162, 164, 166. The one or more computers 162, 164, 166 may be in communication with one another and/or with the instructor station 115 via a suitable network connection such as, for example, a wired connection or a wireless connection. As shown in FIG. 1B, the one or more computers 162, 164, 166 of the main control room 160 may be in communication with the instructor station 115 via an appropriate network switch, such as switch 130; however, it will be appreciated that a wide variety of other connections may be utilized in accordance with embodiments of the invention.

It will be appreciated that any number of external devices and/or systems may be in communication with one or more components of the token ring network. The engineering room 150 and main control room 160 illustrated respectively in FIGS. 1A and 1B are merely examples of external systems that may be in communication with the instructor station 115.

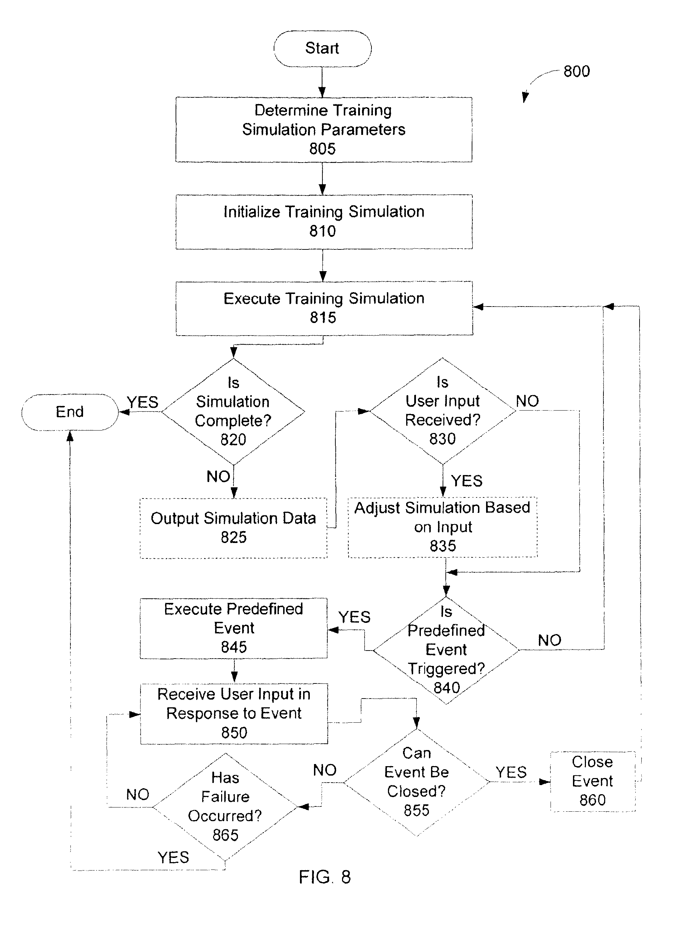

According to an aspect of the invention, the instructor station 115 may additionally facilitate the execution of a training simulator or training simulator component for the simulated engineering project. The instruction station 115 and the training simulator may be executed as an extension of a simulation of an engineering project that is simulated by a simulation executive of an engineering simulator. The training simulator may simulate various operations of the simulated engineering project in order to train an operator. For example, if an integrated gasification combined cycle power plant is simulated, then the training simulator may be operable to simulate the operation of the power plant. Additionally, the training simulator may simulate a wide variety of events that may occur in association with the power plant. The training simulator may then receive user input from an operator in response to a simulated event. The operations of one example of a training simulator in accordance with embodiments of the invention is described in greater detail below with reference to FIG. 8.

With continued reference to FIG. 1A, the equipment simulation model 105 may include one or more computers and or systems that are operable to simulate various equipment utilized in an engineering project. As used herein, the terms "equipment simulation model", "equipment simulator", "equipment simulation system", and "equipment simulation module" may be utilized interchangeably. As an example, if an integrated gasification combined cycle power plant or power system is simulated, then the equipment simulation model 105 may simulate one or more of the physical components of the integrated gasification combined cycle power plant or system. For example, the equipment simulation model 105 may simulate the physics, power generation, and/or electrical power systems associated with the components of the integrated gasification combined cycle power plant. Additionally, the equipment simulation model 105 may simulate one or more methods, processes, and/or techniques associated with the operation of the power plant or system. For example, the equipment simulation model 105 may simulate logistical processes and methods associated with the operation of the power plant or system including, but not limited to, the processing of coal or other resources that are utilized to power one or more gas turbines included in a power plant.

The equipment simulation model 105 may include one or more computers, such as computers 122, 124, 126, 128, 130, 132, 134 shown in FIG. 1A. It will be appreciated that the equipment simulation model 105 may include any number of computers as desired for various embodiments of the invention. In this regard, the equipment simulation model 105 may be scalable. The equipment simulation model 105 may also be flexible in its ability to utilize both any number of computers and any types of computers.

A wide variety of simulation models and/or software programs may be executed by the computers 122, 124, 126, 128, 130, 132, 134 of the equipment simulation model 105 as desired to simulate an engineering project. Utilizing the example of an integrated gasification combined cycle power plant, the computers 122, 124, 126, 128, 130, 132, 134 of the equipment simulation model 105 may include a variety of simulation models and/or software programs that are operable to simulate various components of the power plant and/or various processes associated with the power plant.

With reference to the system 100 depicted in FIG. 1A, for the simulation of an integrated gasification combined cycle power plant, one or more of the computers 122, 124, 126, 128, 130, 132, 134 of the equipment simulation model 105 may be operable to execute one or more software packages and/or programs that model the physical characteristics and/or dynamic aspects of a combined cycle power plant such as, for example, gas turbines, steam turbines, and/or heat recovery systems utilized in a combined cycle power plant. For example, computers 122, 124, 126 may be operable to execute the Easy5^{™} software package that is marketed and sold by MSC Software. It will be appreciated that a wide variety of software packages and/or programs may be utilized as desired to simulate and/or model the physical characteristics and/or dynamic aspects of an engineering project. Additionally, it will be understood that any number of computers, such as one or more of computers 122, 124, 126, 128, 130, 132, 134 may be operable to execute the utilized software packages and/or programs.

Similarly, one or more of the computers 122, 124, 126, 128, 130, 132, 134 of the equipment simulation model 105 may be operable to execute one or more software packages and/or programs that model the electrical components, electrical systems, and/or electrical energy transfer of an integrated gasification combined cycle power plant. It will be appreciated that a wide variety of electrical components, electrical systems, and/or electrical energy transfers may be simulated as desired for an engineering project by any number of suitable software packages and/or programs. For example, a computer of the equipment simulation model 105, such as computer 126, may be operable to execute the Positive Sequence Load Flow Software (PSLF^{™}) that is marketed and sold by the General Electric Company. As illustrated by the execution of the PSLF^{™} software by computer 126, which may also execute a portion or all of the Easy5^{™} software, it will be appreciated that a computer or network station with the token ring network may be operable to execute a plurality of simulation types, software packages, and/or programs.

With continued reference to FIG. 1A, one or more of the computers 122, 124, 126, 128, 130, 132, 134 of the equipment simulation model 105 may be operable to execute one or more software packages and/or programs that model or simulate process manufacturing and/or process engineering associated with an integrated gasification combined cycle power plant. A wide variety of processes associated with an integrated gasification combined cycle power plant may be simulated as desired for an engineering project such as, for example, logistics, resource handling, gasification processing, gas cleanup, etc. These processes may be simulated by any number of suitable software packages and/or programs. For example, one or more of computers 122, 124, 126, 128, 130, 132, 134, such as computers 128, 130, 132, 134, may be operable to execute Aspen^{™} process engineering software that is marketed and sold by Aspen Technology, Inc. Additionally and/or alternatively, one or more of computers 122, 124, 126, 128, 130, 132, 134, such as computers 128, 130, 132, 134, may be operable to execute Dynasim^{™} process engineering software that is marketed and sold by Invensys plc. It will be appreciated that a wide variety of software packages and/or programs may be utilized as desired to simulate and/or model process engineering and/or process manufacturing associated with an engineering project. Additionally, it will be understood that any number of computers, such as one or more of computers 122, 124, 126, 128, 130, 132, 134 may be operable to execute the utilized software packages and/or programs.

The controls simulation model 110 may include one or more computers and or systems that are operable to simulate one or more control systems utilized in an engineering project. As used herein, the terms "controls simulation model", "controls simulator", "controls simulation system", and "controls simulation module" may be utilized interchangeably. As an example, if an integrated gasification combined cycle power plant or power system is simulated, then the controls simulation model 110 may simulate one or more control systems utilized by the power plant or power system.

The controls simulation model 110 may include one or more computers, such as computers 136, 138, 140, 142, 144, and 146 shown in FIG. 1A. It will be appreciated that the controls simulation model 110 may include any number of computers as desired for various embodiments of the invention. In this regard, the controls simulation model 110 may be scalable. The controls simulation model 110 may also be flexible in its ability to utilize both any number of computers and any types of computers.

It will be appreciated that a wide variety of control systems may be simulated or modeled by the controls simulation model 110 as desired for an engineering project. Additionally, a wide variety of different software may be utilized as desired to simulate a control system. For example, if an integrated gasification combined cycle power plant is simulated, the control systems utilized by the power plant may be simulated by one or more of the computers 136, 138, 140, 142, 144, 146 of the controls simulation model 110. One example of a control system that may be simulated is the Mark* VIe^{™} control system that was developed by the General Electric Corporation.

According to an aspect of the invention, the software utilized to simulate the control systems of an engineering project may be at least substantially similar to the software that would be utilized in the control systems of the engineering project. Using the example of an integrated gasification combined cycle power plant simulation discussed above, the software utilized to simulate the Mark* VIe control system may be at least substantially similar to the Mark* VIe control system software that would be utilized at an integrated gasification combined cycle power plant. In this regard, the simulation software may execute in much the same way that the control system software utilized in a power plant would execute.

It will be appreciated that one or more software and/or hardware products or devices may be utilized by the controls simulation model 110 as desired in order to facilitate the proper execution of any control system software that is utilized such as, for example, Mark* VIe control system software. For example, if the Mark* VIe control system software is designed to execute on a special purpose or mainframe computer utilized in a power station, then appropriate software and/or hardware products or devices may be utilized by the controls simulation model 110 in order to facilitate the proper execution of the Mark* VIe software on one or more computers 136, 138, 140, 142, 144, 146 of the controls simulation model 110. In this regard, if one or more personal computers are utilized by the controls simulation model 110, then the Mark* VIe control system software may be properly executed by the one or more personal computers. For example, it will be appreciated that appropriate porting software may be utilized to facilitate the execution of the Mark* VIe control system software by one or more personal computers utilizing a standard operating system, such as the Microsoft Windows^{™} operating system.

According to an aspect of the invention, the various computers included in the instructor station 115, equipment simulation model 105, and/or the controls simulation model 110 may be personal computers. In this regard, the design of a system that facilitates the simulation of an engineering project, such as system 100, may be flexible as any number of personal computers may be utilized as desired to provide an appropriate cumulative processing power. It will be appreciated that a wide variety of different types and models of personal computers may be utilized in embodiments of the invention.

According to another aspect of the invention, a system that facilitates the simulation of an engineering project, such as system 100, may include a plurality of computers that process simulation data in parallel with one another. In this regard, the simulation of an engineering project may be carried out in accordance with a distributed parallel processing model. For example, the equipment simulation model 105 may simulate physical components and processing methods associated with an integrated gasification combined cycle power plant at the same time that the controls simulation model 110 simulates the one or more control systems utilized by the power plant. The instructor station 115 may manage the simulation of the power plant by the other components of the system 100.

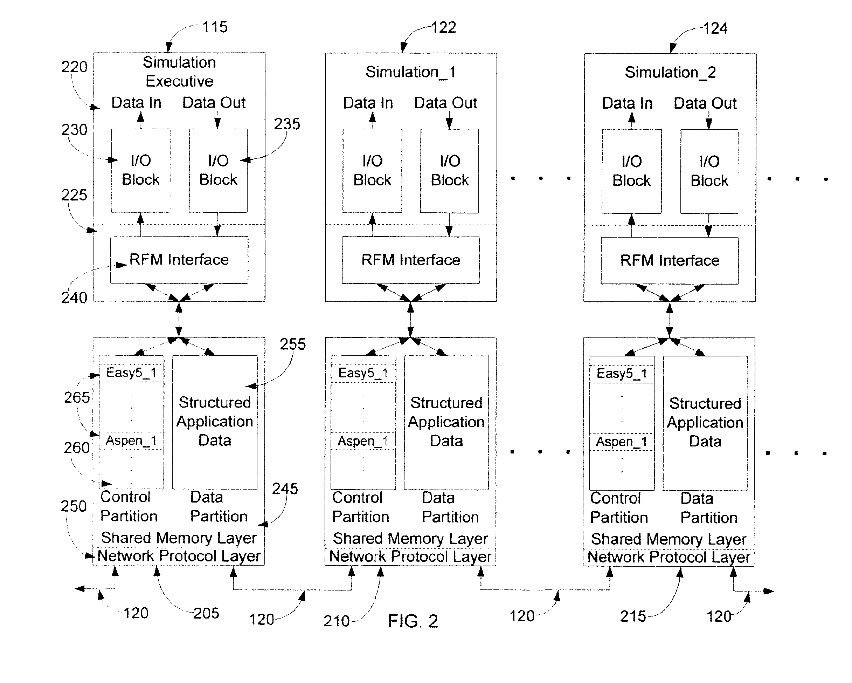

FIG. 2 is a block diagram of one example of a data flow and communication architecture 200 that may be utilized to simulate an engineering project, according to an illustrative embodiment of the invention. The architecture 200 illustrated in FIG. 2 may be an appropriate network architecture for a system that is utilized to simulate engineering projects, such as the system 100 illustrated in FIG. 1A. For example, the architecture 200 may be a token ring network of a plurality of computers that are utilized to simulate an engineering project, such as the computers 117, 118, 122, 124, 126, 128, 130, 132, 134, 136, 138, 140, 142, 144, 146 illustrated in the system 100 of FIG. 1A.

In accordance with an aspect of the invention, each of the computers or network stations in the architecture 200 may include one or more memories that are operable to store data that is shared by each of the computers or network stations of the architecture. In this regard, the simulation components that are executed by each of the computers can be synchronized with one another. For example, each of the computers may include one or more reflective memory devices that facilitate the storage of shared data at each of the computers.

With reference to FIG. 2, the architecture 200 may include any number of computers or network stations, such as an instructor station 115, a first simulation computer 122, a second simulation computer 124, etc. The first and second simulation computers 122, 124 may execute any suitable software or software components utilized in a simulation such as, for example, Easy5^{™} software. Each of the computers or network stations may include a reflective memory card or reflective memory device. For example, the instructor station 115 may include an instructor station reflective memory card 205, the first simulation computer 122 may include a first simulation computer reflective memory card 210, and the second simulation computer 124 may include a second simulation computer reflective memory card 215.

It will be appreciated that other computers or network stations included in the architecture 200 may also include a reflective memory card or reflective memory device. Each of the reflective memory cards or reflective memory devices may provide a block of dedicated memory, such as dedicated random access memory (RAM) and facilitate relatively high speed network communication to the other reflective memory cards or devices in the network. When data in the dedicated RAM of one reflective memory card is updated, altered, or changed, those updates or changes may be shared with the other reflective memory cards or devices in the network.

Each of the reflective memory cards, such as cards 205, 210, 215, may be in communication with a token ring network hub, such as token ring network hub 120 depicted in FIG. 1A. In this regard, each of the reflective memory cards 205, 210, 215 may be capable or communicating and/or receiving data over a token ring network. In accordance with an aspect of the invention, one or more shared data values and/or data parameters may be maintained by each of the reflective memory cards 205, 210, 215 of the token ring network. These shared data values and/or data parameters may be updated in each of the reflective memory cards 205, 210, 215 when they are altered, changed or updated by a computer 115, 122, 124 of the architecture 200. If a computer updates a data value, that data value may be updated at each of the other computers via the reflective memory cards.

For purposes of this disclosure, at least a portion of the components of the instructor station 115 are described; however, it will be understood that each of the other network stations may include similar components. Additionally, it will be understood that the instructor station 115 may include more than one computer, such as computers 117 and 118 depicted in FIG. 1A.

The instructor station 115 may include an application layer 220 and a communication layer 225. The communication layer 225 may facilitate communication between the reflective memory card 205 and the instructor station 115. It will be appreciated that the communication layer 225 may include suitable hardware and/or software that facilitates communication between the reflective memory card 205 and the instructor station 115 such as, for example, suitable ports, slots, data buses, drivers, etc. As shown in FIG. 2, the communication layer 225 may include a RFM interface 240 that is operable to facilitate communication between the reflective memory card 205 and the application layer 220 of the RFM interface 240. The RFM interface 240 may be a suitable hardware and/or software interface between the reflective memory card 205 and the instructor station 115.

The application layer 220 may include at least a data input block 230 and a data output block 235. The data input or data in block may receive data from the RFM interface 240. The received data may be communicated to one or more software programs that are operating on or executed at the instructor station 115 and the received data may be utilized as desired in the execution of the one or more software programs. Additionally, the received data may be stored in one or more memory devices associated with the instructor station as desired in certain embodiments of the invention. The data output or data out block may receive data from one or more software programs that are operating on or executed at the instructor station 115 and communicate the data to the reflective memory card 205 via the RFM interface 240.

The reflective memory card 205 may be operable to store one or more data variables, parameters, and/or values that may be shared with the other computers of the token ring network. Additionally, the reflective memory card 205 may be operable to receive from the token ring network and/or communicate to the token ring network updated data variables, parameters, and/or values.

The reflective memory card 205 may include at least a shared memory layer 245 and a network protocol layer 250. The shared memory layer 245 may facilitate the storage of shared data variables, parameters, and/or values by the reflective memory card 205. According to certain embodiments of the invention, the shared memory layer 245 may include at least a data partition 255 and a control partition 260. The data partition 255 may be operable to store shared data values and/or parameters that are utilized by the various simulation software that is executed by the computers or network stations of the token ring network. It will be appreciated that a wide variety of data values or parameters may be stored in the data partition 255 as desired in certain embodiments of the invention. The control partition 260 may store shared data values and/or parameters that are utilized to control the synchronization and/or proper execution of the various simulation software. For example, the control partition 260 may be utilized to store a shared global timer or system clock for a simulation as well as data that defines which network stations control certain aspects of a simulation.

The network protocol layer 250 may facilitate the communication of data from the reflective memory card 205 onto the token ring network and/or the receipt of data at the reflective memory card 205 from the token ring network. When a data value or parameter is updated in the shared memory layer 245 of the reflective memory card 205, the network protocol layer 250 may facilitate the communication of the updated data onto the token ring network so that the other reflective memory cards of the token ring network may be updated. Additionally, when an updated data value or parameter is received via the token ring network at the network protocol layer 205, the data value or parameter stored in the shared memory layer 245 may be updated in accordance with the received data.

According to an aspect of the invention, the architecture 200 illustrated in FIG. 2 may facilitate the distributed parallel processing of the simulation of an engineering project. The architecture 200 may include any number of computers and/or network stations that are in communication with one another via a token ring network. The number of computers and/or network stations utilized in the architecture may be flexible and/or scalable as desired for simulating an engineering project.

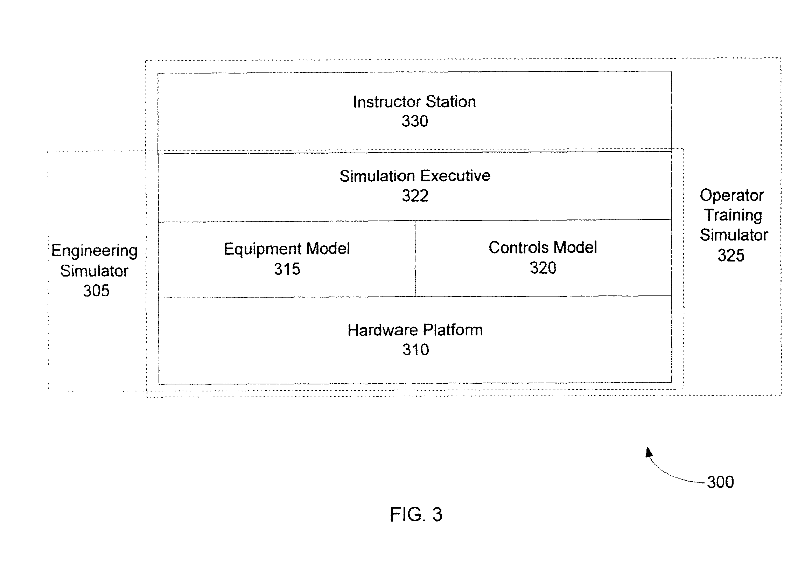

FIG. 3 is a block diagram of one example of the components of a system 300 utilized to simulate engineering projects and as a training simulator for the engineering projects, according to an illustrative embodiment of the invention. The system 300 may include software and/or hardware components that are utilized to simulate an engineering project. Additionally, the system 300 may include software and/or hardware components that may be operable to execute or control the execution of an operator training simulator for a simulated engineering project.

According to an aspect of the invention, the system 300 may include a layered architecture. The layered architecture may include at least a hardware platform 310, an equipment model 315, and a controls model 320. The hardware platform 310 may include any number of suitable hardware components operable to facilitate the simulation of an engineering project. For example, the hardware platform 310 may include a plurality of computers operable to execute various software and/or software packages in order to simulate an engineering project. The hardware platform 310 may additionally include a plurality of shared memory devices such as, for example, reflective memory cards that facilitate the sharing and updating of data between one or more of the plurality of computers. The hardware platform 310 may also include drivers and/or other software that support the use of the shared memory devices.

The equipment model 315 may include one or more software components and/or software packages that are operable to simulate the physical equipment and/or processes associated with an engineering project. Similarly, the controls model 320 may include one or more software components and/or software packages that are operable to simulate one or more control systems that are utilized in an engineering project. As shown in FIG. 3, the hardware platform 310 may facilitate the execution of both the equipment model 315 and the controls model 320. It will be appreciated that the execution of the various software packages of the equipment model 315 and/or the controls model 320 may be adapted to execute on a variety of different types of hardware platforms. Alternatively, it will be appreciated that a wide variety of different porting and/or interface adaptation programs may be utilized to facilitate the execution of the various software packages of the equipment model 315 and/or the controls model 320 on a hardware platform.

Additionally, a simulation executive 322 layer may be included that facilitates the monitoring and control of the various software components and/or hardware components of the system 300. An engineering simulator 305 may be formed by the combination of the hardware platform 310, equipment model 315, controls model 320, and simulation executive 322. The engineering simulator 305 may be utilized to simulate a wide variety of different engineering projects such as, for example, an integrated gasification combined cycle power plant. As shown in FIG. 3, it will be appreciated that an instructor station is not a necessary component of an engineering simulator.

With continued reference to FIG. 3, an instructor station 330 may be added to the system 300 in order to facilitate the execution of an operator training simulator of an engineering project. The instructor station 330 may execute a variety of different training programs and/or training simulations that may be utilized to train an operator and/or potential operator of an engineering project. As shown in FIG. 3, an operator training simulator 325 may be formed by adding an instructor station 330 to the engineering simulator 305.

The instructor station 330 may include software and/or hardware components. For example, the instructor station 330 may include one or more software components that are operable to execute a wide variety of training programs. These software components may be executed by one or more computers included in the instructor station 330. Additionally and/or alternatively, these software components may be executed by the computers included in the hardware platform 310 of the engineering simulator 305.

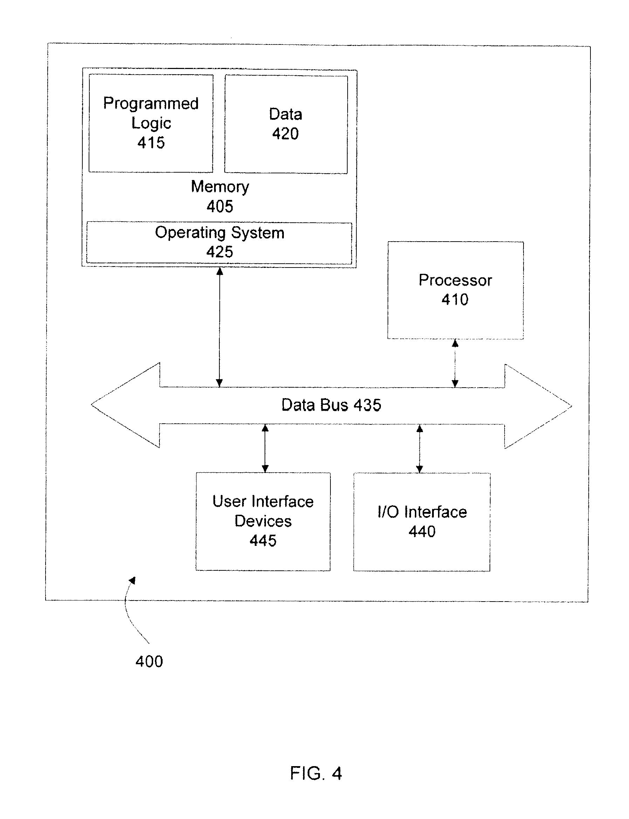

FIG. 4 depicts a block diagram of one example of a computer 400 that may be utilized in accordance with various embodiments of the invention in order to execute and/or control an engineering project simulation and/or a training simulation. It will be appreciated that each of the computers utilized in a system that simulates an engineering project, such as system 100, may include substantially similar components to the computer 400 depicted in FIG. 4.

The computer 400 may include a memory 405 that stores programmed logic 415 (e.g., software) in accordance with embodiments of the invention. The memory 405 may also include data 420 utilized in the operation of these embodiments of the invention and an operating system 425. A processor 410 may utilize the operating system 425 to execute the programmed logic 415, and in doing so, may also utilize the data 420. A data bus 435 may provide communication between the memory 405 and the processor 410. The computer 400 may be in communication with external devices, such as a reflective memory card, via one or more suitable input output (I/O) interfaces 440. Users may interface with the computer 400 via one or more user interface device(s) 445 such as a keyboard, mouse, control panel, or any other devices capable of communicating digital data to the computer 400. The computer 400 and the programmed logic 415 implemented thereby may comprise software, hardware, firmware or any combination thereof. Further, it will be appreciated that a suitable computer utilized in accordance with embodiments of the invention may include more or less than all of the components illustrated in FIG. 4.

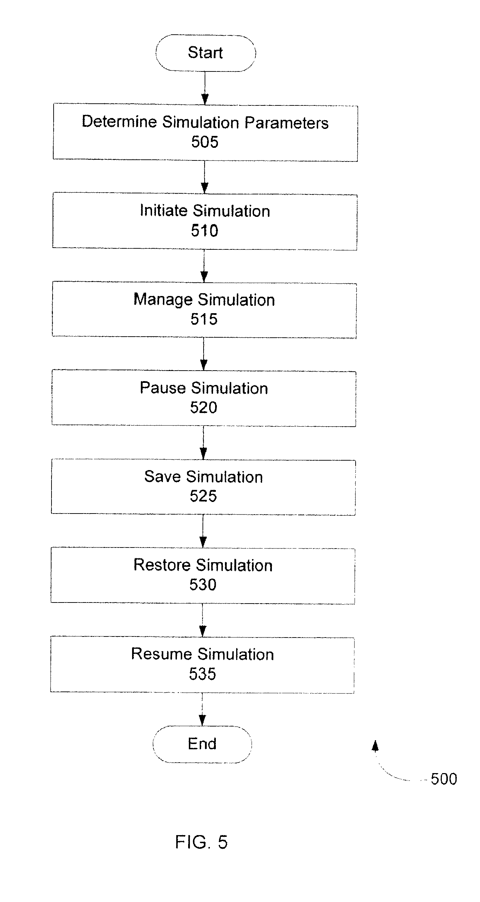

FIG. 5 is a flow chart of one example of a method 500 for conducting a simulation of an engineering project, according to an illustrative embodiment of the invention. The method 500 of FIG. 5 may be utilized to simulate a wide variety of different engineering projects such as, for example, an integrated gasification combined cycle power plant. The method 500 may be carried out by one or more appropriate computers that are operable to execute one or more suitable software programs in order to simulate an engineering project.

With reference to FIG. 5, the method 500 may begin at block 505. At block 505, one or more simulation parameters may be determined. The one or more simulation parameters may set forth guidelines, characteristics, and/or elements of a simulation. Additionally, the one or more simulation parameters may set forth and/or be utilized to determine the components of a simulation system that will be utilized to simulate an engineering project such as, for example, the computers and or software programs that will be utilized for a simulation.

A wide variety of simulation parameters may be determined at block 505. These simulation parameters may include, but are not limited to, the components and/or software programs that are utilized in a simulation, the variables and/or data values that will be shared by multiple components of a simulation system, the initial values of any shared variables and/or data values, one or more rules that prioritize the control that system components may have over editing certain shared data variables (prioritization may be global prioritization or specific to one or more data variables and/or groups of data variables), the initial state of a simulation, and/or the speed of a simulation. It will be appreciated that an engineering simulation may be carried out at a wide variety of different speeds as desired such as, for example, in real time or approximate real time, in faster than real time, and/or in slower than real time.

According to an aspect of certain embodiments of the invention, the one or more simulation parameters may be determined by an instructor station that is operable to manage the simulation of an engineering project such as, for example, the instructor station 115 shown in FIG. 1A. It will, however, be appreciated that the one or more simulation parameters may be determined by one or more other components of a simulation system.

According to an aspect of the invention, one or more of the simulation parameters may be based at least in part on user preferences and/or user input. For example, a user may input one or more simulation parameters into an instructor station, such as instructor station 115. As another example, user preferences may be stored in one or more suitable memory devices and accessed at block 505. User preferences may also be communicated to a simulation system from one or more external devices and/or systems as desired in certain embodiments of the invention.

At block 510, a simulation may be initiated. In order to initiate a simulation, the various components that are utilized in the simulation may be initialized and the simulation may be started. In order to initialize the various components that are utilized such as, for example, the various software packages utilized in a simulation, one or more simulation parameters and/or one or more initial values of shared data variables may be communicated as desired to the various components.

Additionally, a simulation counter or simulation timer may be started. The simulation counter may facilitate the synchronization of the various components utilized in the simulation. For example, a component utilized in the simulation may access the simulation counter in order to determine whether it may perform additional steps in its part of the simulation or, alternatively, whether it should wait for other components to complete a portion of their various simulations. In this regard, the simulation counter may operate as a global counter or simulation clock that is shared by the various components of the simulation system. Alternatively, an instructor station, such as instructor station 115 may control and manage the various components based at least in part on the simulation counter.

At block 515, the simulation may be managed. A simulation may be managed throughout its execution. The management of a simulation may include, among other things, synchronizing the components of the simulation system, monitoring the execution of the simulation by the various components, updating shared data values between the components of the simulation system, outputting data associated with the simulation, and/or receiving user input associated with the execution of the simulation.

It will be appreciated that a simulation may be managed by an instructor station such as, for example, the instructor station 115 shown in FIG. 1A. The instructor station 115 may manage or control the execution of the various software components utilized to conduct a simulation. Additionally, the instructor station 115 may synchronize the execution of the various software components. Synchronization of the various software components may facilitate the accurate updating of one or more shared data variables between the various software components throughout the execution of the simulation. In this regard, a simulation may be accurately carried out by various software components that are operating in parallel with one another. This parallel processing may facilitate the use of any number of computers and/or other network stations in a simulation system such as, for example personal computers.

It will be appreciated that, at any point during the management and execution of a simulation, the simulation may be saved and/or paused. A paused simulation may be resumed at a subsequent point in time. Similarly, a saved simulation may be restored at a subsequent point in time and the restored simulation may be resumed. Although blocks 520 through 535 below illustrate the pausing, saving, restoring, and resuming of a simulation as sequential steps, it will be appreciated that these steps may be carried out in any order. Additionally, the management of a simulation may continue throughout the execution of any of these steps.

At block 520, the simulation may be paused. During the pausing of the simulation, the execution of the various software components of the simulation may be paused or suspended. Additionally, the simulation counter may be paused. The recognition of user input and/or input from external devices to the simulation system may be suspended once a simulation has been paused. It will be appreciated that certain commands and/or input may be allowed while a simulation is paused such as, for example, commands to save the simulation, close the simulation, and/or resume the simulation.

It will be appreciated that an appropriate indication or message may be output by one or more components of a simulation system when a simulation is paused. For example, one or more of the computers utilized in a simulation such as, for example, an instructor station, may output and/or display an appropriate message indicating that the simulation has been paused. As another example, one or more of the computers utilized in a simulation such as, for example, an instructor station, may communicate or transmit a message to one or more external devices or systems indicating that the simulation has been paused.

Operations may continue at block 525 and the simulation may be saved. It will be appreciated that the simulation may be saved at predetermined time intervals, upon the occurrence of predetermined events, and/or as a result of received user input or input from an external device and/or system.

During the saving of a simulation, the states of the various software components of the simulation system may be saved to one or more appropriate memory devices. Additionally, the values of one or more shared data variables may be saved to one or more appropriate memory devices. It will be appreciated that any data that may be desired to reload the simulation at a subsequent point in time may be stored in one or more suitable memory devices during the saving of a simulation. Additionally, it will be understood that one or more files including the saved data may be stored centrally at an instructor station or, alternatively, files including the saved data may be stored at each of the various computers utilized in a simulation system.

Similarly to the pausing of the simulation, an appropriate indication or message may be output by one or more components of a simulation system when a simulation is saved.

Operations may continue at block 530 and the saved simulation may be restored. During the restoration of a saved simulation, the saved states of each of the various software components of the simulation may be restored utilizing the saved simulation data. Additionally, the saved shared data variables may be restored.

According to an certain embodiments of the invention, when a saved simulation is being restored, parameters and/or data values may be ignored if they exist in only one of a saved state file and in an executing copy of a software component or software suite utilized to conduct the simulation. In this regard, a saved simulation may be restored in a simulation system even if changes and/or updates have been made to one or more of the software components utilized in the system. Additionally, it will be appreciated that a user may optionally be prompted to enter values for one or more of the data variables or parameters that are not shared by both the executing copy of a software component and a saved state file.

Similarly to the pausing and saving of the simulation, an appropriate indication or message may be output by one or more components of a simulation system when a simulation is restored.

Operations may continue at block 535 and the simulation may be resumed. In order to resume a simulation, the execution of the various software components utilized by the simulation system may be resumed. Additionally, the incrementing of the simulation counter may be resumed.

Similarly to the pausing, saving, and restoring of a simulation, an appropriate indication or message may be output by one or more components of a simulation system when a simulation is resumed.

The method 500 may end following block 535.

It will be appreciated that the operation described above with reference to the method 500 shown in FIG. 5 do not necessarily have to be performed in the order set forth in FIG. 5, but instead may be performed in any suitable order. It will also be appreciated that two or more of the operations described in the method 500 may be performed in parallel with one another. Additionally, it will be understood that, in certain embodiments of the invention, more or less than all of the operations set forth in FIG. 5 may be performed.

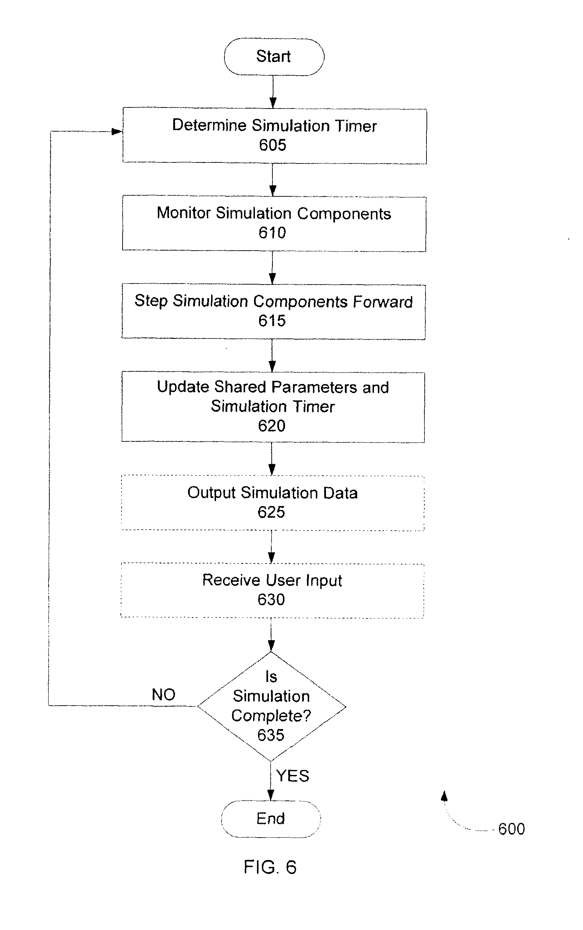

FIG. 6 is a flow chart of one example of a method 600 for managing a simulation of an engineering project, according to an illustrative embodiment of the invention. The method 600 depicted in FIG. 6 may be, for example, an extrapolation of block 515 shown in FIG. 5; however, it will be appreciated that the method 600 may be utilized in accordance with a variety of embodiments of the invention and/or as a component of a wide variety of other methods. The method 600 may be carried out by one or more components of a simulation system that are operable to manage the execution of a simulation such as, for example, by the instructor station 115 depicted in FIG. 1A.

With reference to FIG. 6, the method 600 may begin at block 605. At block 605, the value of a simulation timer that facilitates the synchronization of the various software components of the simulation system may be determined. Following the determination of the value of the simulation timer, operations may continue at block 610.

At block 610, the various software components utilized in the simulation may be monitored. During the monitoring of the various software components, the timing of the respective software components may be compared to the simulation timer. A determination may be made as to whether or not the execution of each of the software components is approximately in line with the simulation timer. The execution of a software component may be adjusted if it is not approximately in line with the simulation timer or alternatively, the simulation may be ceased an appropriate error message may be output. In this regard, the various software components utilized in the simulation may be synchronized.

Operations may continue at block 615. At block 615, the various software components utilized in the simulation may be stepped forward. As an example, each of the respective software components may execute their next programming instruction. In this regard, each of the various software components may execute in parallel. Additionally, each of the various software components may be synchronized with one another. It will be appreciated that if a software component is executing multiple instructions in parallel with one another, then each of those instructions may be executed. Following the stepping forward of the various simulation software components, operations may continue at block 620.

At block 620, shared data variables and/or parameters may be updated. For example, if a shared data variable has been updated or altered by at least one of the software components of the simulation system, then the new value of the data variable may be communicated to the other components of the simulation system. In accordance with certain embodiments of the invention, a token ring network in which each of the network stations or computers includes a reflective memory device may be utilized to facilitate the sharing and updating of data values, as described above with reference to FIGS. 1A and 2. If multiple software components have updated or altered a shared data variable or parameter, then one or more priority rules may be utilized to determine the updated value of the shared data variable or parameter that will be stored by the other components of the simulation system.

Additionally, at block 620, the simulation timer may be updated. The simulation timer may be incremented in order to reflect a new simulation timer. It will be appreciated that the simulation timer may be updated in real time, in faster than real time, and/or in slower than real time. The rate at which the simulation timer is incremented may be determined by one or more simulation parameters that are established prior to the execution of the simulation, as discussed above with reference to FIG. 5. Following the updating of shared variables and/or parameters and the updating of the simulation timer at block 620, operations may continue at block 625.

At block 625, which may be optional in some embodiments, data associated with the simulation may be output as desired by one or more of the components of the simulation system. Data associated with the simulation may be output utilizing a wide variety of output devices such as, for example, a suitable display and/or a suitable printer. Data may also be output by communicating or transmitting the data to one or more devices or systems that are external to the simulation system. It will be appreciated that data may be output in a wide variety of different formats as desired in an embodiment of the invention. For example, one or more graphical user interfaces may be formatted for display to a user and the data displayed by the graphical user interfaces may be updated.

Additionally, it will be appreciated that data associated with the execution of the simulation may be stored and/or logged in one or more suitable memory devices and/or memory files.

Operations may continue at block 630, which may be optional in some embodiments. At block 630, user input and/or input from one or more external devices and/or systems may be received. Input may be received by utilizing any number of suitable devices, methods, and/or techniques including, but not limited to, one or more suitable network connections and/or one or more suitable input devices. Suitable input devices may include, for example, a portable memory device, a diskette, a CD-ROM's, a mouse, a keyboard, a touch screen display, etc.

It will be appreciated that any received input may be communicated to one or more appropriate software components of the simulation system as desired and that the operation of the various components of the simulation may be adjusted in accordance with any received input. Additionally, it will be appreciated that one or more shared data variables and/or parameters may be updated as desired in association with any received input.

Operations may continue at block 635. At block 635, a determination may be made as to whether the simulation has been completed. It will be appreciated that the simulation may be determined to be completed in a wide variety of ways. For example, the simulation may be determined to be complete once the simulation timer reaches a predetermined value. As another example, the simulation may be determined to be complete once one or more predetermined events have occurred, such as, for example, a desired result in the simulated engineering project or a recognized error or flaw in the simulated engineering project. As another example, the simulation may be determined to be complete if a data variable utilized by the simulation is determined to be outside of a predetermined threshold range. As yet another example, a simulation may be determined to be complete based on received input.

If it is determined that the simulation is complete at block 635, then the method 600 may end following block 635. However, if it determined at block 635 that the simulation is not complete, then operations may continue at block 605.

It will be appreciated that the operation described above with reference to the method 600 shown in FIG. 6 do not necessarily have to be performed in the order set forth in FIG. 6, but instead may be performed in any suitable order. Additionally, it will be understood that, in certain embodiments of the invention, more or less than all of the operations set forth in FIG. 6 may be performed.

For example, certain embodiments of the inventions may store various types of data during and/or throughout the execution of a simulation such as, for example, data associated with the values of one or more simulation parameters and/or variables. Trends may then be determined based at least in part of the stored data. A variety of reports may also be generated based at least in part on the data and/or the determined trends, and the generated reports may be output by any number of suitable output devices such as, for example, a graphical display.

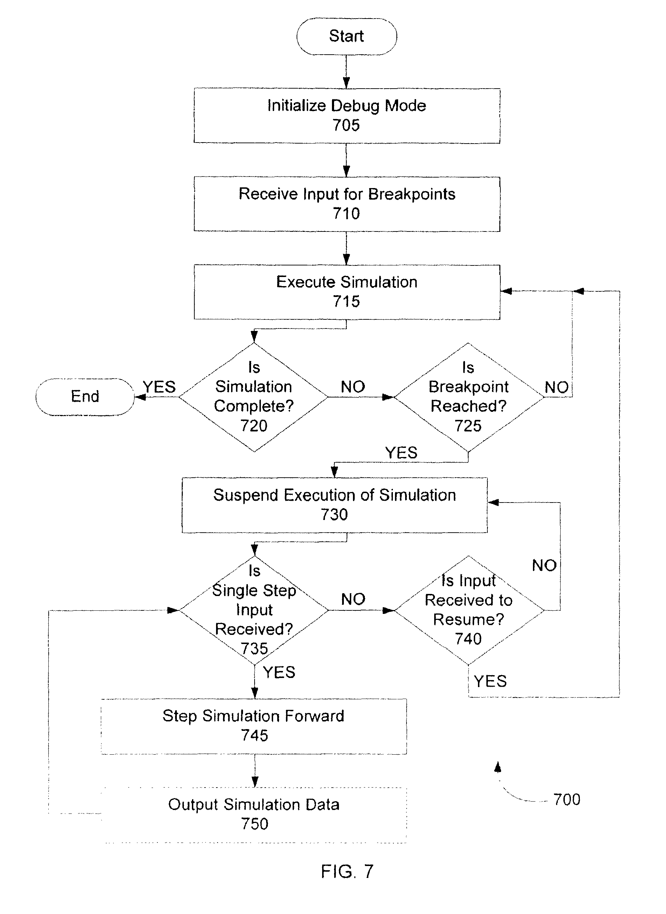

FIG. 7 is a flow chart of one example of a method 700 for debugging an engineering project, according to an illustrative embodiment of the invention. It will be understood and appreciated that a wide variety of errors and/or other events may occur during the simulation of an engineering project. For example, if an integrated gasification combined cycle power plant is simulated, a wide variety of errors, faults, and/or other events may occur during the simulation such as, for example, parameters of the integrated gasification combined cycle power plant falling outside of acceptable ranges. Alternatively, it will be appreciated that a user may desire to stop a simulation at one or more predetermined points in time in order to monitor a simulated engineering project. According to an aspect of the invention, a method 700 may be provided to a user that facilitates the debugging of a simulation. The debugging method may facilitate the identification of errors in a simulated engineering project and/or the updating of a simulated engineering project.

The method 700 may begin at block 705. At block 705, the debug mode may be initialized. The debug mode may be initialized based at least in part on user input that is received by one or more suitable input devices such as, for example, a mouse and/or keyboard. For example, a user may select an option to simulate an engineering project in the debug mode. As another example, a user may enter one or more key strokes and/or sequences of key strokes in order to enter the debug mode.

Once the debug mode has been initialized at block 705, operations may proceed to block 710. At block 710, user input for one or more breakpoints may be received. A breakpoint may be a point or a time during the execution of a simulation at which the execution of the simulation is paused or stopped. A breakpoint may specify a predetermined condition during the execution of a simulation that, when satisfied or reached, will be operable to pause or stop the execution of the simulation.

It will be appreciated that one or more breakpoints may be established or defined in a multitude of different ways as desired in embodiments of the invention. For example, a breakpoint may be established based at least in part on a predetermined simulation time at which the execution of the simulation will be paused or stopped. A simulation timer may be compared to the predetermined simulation time and the execution of the simulation may be paused or stopped once it has been determined that the simulation timer is approximately equal to the predetermined simulation time. As another example, a breakpoint may be established based at least in part on one or more events or predetermined conditions that may be tested for during the execution of a simulation, and the simulation may be paused or stopped once the one or more events or predetermined conditions have been satisfied. As yet another example, a breakpoint may be established based at least in part on predetermined value of a variable or parameter that is utilized in the simulation. The value of one or more variables or parameters utilized in the simulation may be monitored and compared to one or more respective predetermined values. The simulation may be paused or stopped if it is determined that the value of each variable or parameter monitored for a breakpoint is approximately equal to a respective predetermined value utilized for the breakpoint.

It will be appreciated that user input for one or more breakpoints may be received in accordance with a wide variety of devices, methods, and/or techniques as desired in certain embodiments of the invention. For example, one or more suitable input devices may facilitate the collection of user input related to one or more breakpoints. Suitable input devices may include, for example, a keyboard and or mouse that are utilized in association with one or more suitable output devices such as, for example, a display. A user may enter input associated with establishing one or more breakpoints via the input devices.

Once the one or more breakpoints have been established at block 710, operations may continue at block 715. At block 715, a simulation may be executed. During its execution, the simulation may be managed and monitored as desired in an embodiment of the invention such as, for example, in accordance with the method 515 described above with reference to FIG. 6.

During the execution of a simulation, a determination may be made at block 720 as to whether the execution of the simulation is complete. If it is determined at block 720 that the execution of the simulation is complete, then the method 700 may end. If, however, it is determined at block 720 that the execution of the simulation is not complete, then operations may continue at block 725.

At block 725, a determination may be made as to whether a breakpoint has been reached. In order to determine whether a breakpoint has been reached, a determination may be made as to whether one or more predetermined conditions upon which a breakpoint is established are satisfied. For example, if a breakpoint is established based at least in part on a predetermined simulation time, then a determination may be made at block 725 as to whether the predetermined simulation time has reached and/or satisfied. It will be appreciated that a wide variety of different breakpoints may be tested for at block 725 as desired in embodiments of the invention.

If it is determined at block 725 that no breakpoints have been reached or satisfied, then operations may continue at block 715 and the execution of the simulation may be continued. If, however, it is determined at block 725 that at least one breakpoint has been reached, then operations may continue at block 730.

At block 730, the execution of the simulation may be suspended. It will be appreciated that an appropriate indication or message may be output by one or more components of a simulation system when the execution of the simulation is suspended or paused. An appropriate indication or message may also be output that indicates the breakpoint that has been reached. For example, one or more of the computers utilized in a simulation such as, for example, an instructor station, may output and/or display an appropriate message indicating that the execution of the simulation has been suspended because a breakpoint has been reached. As another example, one or more of the computers utilized in a simulation such as, for example, an instructor station, may communicate or transmit a message to one or more external devices or systems indicating that the execution of the simulation has been suspended or paused.

Once the execution of the simulation has been suspended at block 730, operations may continue at block 735. At block 735, a determination may be made as to whether a single step input has been received. A single step input may indicate a desire by a user to step though the application code and/or execution of a simulation model. It will be appreciated that the application code may be stepped through at any level of a simulation as desired in certain embodiments of the invention. A single step input may be received from a user via one or more suitable input devices as desired in embodiments of the invention such as, for example, a keyboard, a mouse, etc.

If it is determined at block 735 that a single step input has been received, then operations may continue at block 745, as discussed in greater detail below. If, however, it is determined at block 735 that no single step input has been received, then operations may continue at block 740.

At block 740, a determination may be made as to whether an input to resume the simulation has been received. It will be appreciated that an input to resume the simulation may be received from a user via one or more suitable input devices as desired in embodiments of the invention such as, for example, a keyboard, a mouse, etc. If it is determined at block 740 that an input to resume the simulation has been received, then operations may continue at block 715 and the execution of the simulation may be resumed. If, however, it is determined at block 740 that an input to resume the simulation has not been received, then operations may continue at block 730 discussed above.

It will be appreciated that an appropriate indication or message may be output by one or more components of a simulation system when the execution of the simulation is resumed. For example, one or more of the computers utilized in a simulation such as, for example, an instructor station, may output and/or display an appropriate message indicating that the execution of the simulation has been resumed.

If a single step input is received at block 735, then operations may continue at block 745. At block 745, the execution of the simulation may be stepped forward. During a single step, the application code and/or execution of a simulation model may be stepped forward. It will be appreciated that the application code may be stepped forward at any level of a simulation as desired in certain embodiments of the invention. As an example, a component of the simulation such as, for example, a component that simulates an aspect of a gasification combined cycle power plant, may be stepped forward. As another example, a plurality of components of the simulation may be stepped forward.

At block 750, which may be optional in some embodiments, data associated with the simulation and/or the execution of the simulation may be output by one or more components of the simulation system such as, for example, by one or more suitable displays associated with the simulation system. A wide variety of different data may be output as desired in certain embodiments of the invention such as, for example, current values of one or more data variables and/or parameters, a current value of the simulation timer, and/or an indication that the simulation has been stepped forward. It will be appreciated that a user may select one or more components of the simulation for which data is output. It will also be appreciated that a user may select one or more data variables and/or parameters for which data is output.

Following the output of simulation data at block 750, operations may continue at block 735 and a determination may be made as to whether an additional single step input has been received. In this regard, a user may step through the execution of a simulation in order to track various parameters and/or outputs as desired. A user may also choose to resume the execution of the simulation or to cease the execution of the simulation at any time. The method 700 may end if a user ceases or ends the execution of the simulation or if the simulation is complete.

It will be appreciated that the operation described above with reference to the method 700 shown in FIG. 7 do not necessarily have to be performed in the order set forth in FIG. 7, but instead may be performed in any suitable order. Additionally, it will be understood that, in certain embodiments of the invention, more or less than all of the operations set forth in FIG. 7 may be performed.

FIG. 8 is a flow chart of one example of a method 800 for conducting a training simulation for an engineering project, according to an illustrative embodiment of the invention. According to an aspect of the invention, a simulation system for an engineering project may incorporate or be extended to include a training simulator or training simulator component. The training simulator may facilitate the training of operators or other personnel on the proper use and/or operation of the equipment or engineering project that is simulated by the simulation system. The development of training simulators for engineering projects may be a relatively costly and time-consuming process. In accordance with an aspect of the invention, a training simulator may be provided with relatively little additional effort than that utilized to simulate the underlying engineering project.

Additionally, in accordance with an aspect of the invention, the training simulator may utilize the same control system that it utilized to simulate the controls of an engineering project such as, for example, the controls simulation model 110 illustrated in FIG. 1A. As an example, as part of a simulation for an integrated gasification combined cycle power system, the control system for the power system may be simulated by the controls simulation model 110. A training simulator may also utilize the controls simulation model 110 to facilitate the execution of training programs, scenarios, and/or simulations.

The method 800 for conducting a training simulation of an engineering project may begin at block 805. At block 805, one or more training simulation parameters may be determined. The training simulation parameters may be utilized to define training scenarios and/or training objectives. For example, the training simulation parameters may define the starting conditions or starting state for a training scenario. In the example of an integrated gasification combined cycle power plant, the training simulation parameters may establish, among other things, the initial conditions for the power plant such as, for example, startup conditions, turbine load conditions, etc. As another example, the training simulation parameters may define events that will occur during a training simulation. It will be appreciated that events may occur either randomly, at a predetermined point in time, and/or following the occurrence of one or more prerequisite conditions. A wide variety of different events may occur during a training simulation as desired in certain embodiments of the invention.

A portion or all of the training simulation parameters may be selected and/or input by any number of suitable individuals such as, for example, an individual that is being trained or instructed utilizing the training simulation or an instructor that is coordinating a training simulation for a trainee. Additionally or alternatively, a portion or all of the training simulation parameters may be defined in accordance with one or more predetermined training scenarios that will be carried out during a training simulation. It will be appreciated that one or more predetermined training scenarios may be stored in one or more suitable memory devices associated with one or more components of a simulation system, such as by a component of the system 100 illustrated in FIG. 1A. It will also be appreciated that one or more predetermined training scenarios may be received by a simulation system 100 utilizing any number of suitable input devices and/or connections such as, for example, disk drives, portable memory devices, and/or network connections.

Following the determination of the training simulation parameters, operations may continue at block 810 and a training simulation may be initialized. Although the method 800 describes the training simulation parameters as being determined prior to the initialization of a training simulation, it will be appreciated that one or more training simulation parameters may be determined, input, and/or received following the initialization of a training simulation at block 810.

At block 815, the initialized training simulation may be executed. During the execution of the training simulation, an engineering project such as, for example, an integrated gasification combined cycle power plant, may be simulated in accordance with the training simulation parameters in order to train personnel on the suitable or proper operation of the engineering project.

At block 820, a determination may be made as to whether the training simulation is complete. If it is determined at block 820 that the training simulation is complete, then the operations of method 800 may end. If, however, it is determined at block 820 that the training simulation is not complete, then operations may continue at block 825.

At block 825, which may be optional in some embodiments, data associated with the training simulation may be output. It will be appreciated that a wide variety of data may be displayed or otherwise output as desired to facilitate training. For example, data associated with the current status and operation of one or more components of the simulated engineering project may be displayed to a trainee. As other examples, data may be communicated to an external device or system, stored to a portable memory device, and/or printed.

At block 830, a determination may be made as to whether any user input or other input is received. Input may be received from a wide variety of sources such as, for example, from a trainee that is utilizing the training simulation and/or from an instructor of the trainee. For example, a trainee may input instructions intended to adjust or alter the operation of a simulated engineering project. The trainee may input the instructions in response to output simulation data associated with the current status of the simulated engineering project. As another example, an instructor may input instructions intended to modify the execution of the training simulator and/or the underlying simulated engineering project. In this regard, an instructor may introduce new training simulation parameters and/or scenarios for the training simulation. For example, an instructor may input instructions that insert malfunctions into the simulated engineering project. It will be appreciated that any number of suitable devices may be utilized as desired in certain embodiments of the invention to receive user input such as, for example, a keyboard, a mouse, a touchpad, a selectable display, etc.

If it is determined at block 830 that no user input has been received, then operations may continue at block 840. If, however, it is determined at block 830 that user input has been received, then operations may continue at optional block 835 and the execution of the training simulation may be adjusted based at least in part on the received user input. Operations may then continue at block 840.

At block 840, a determination may be made as to whether one or more predefined events have been triggered. A predefined event may be any predetermined condition, event, and/or scenario that is triggered once one or more threshold conditions associated with the predefined event have occurred. For example, a predefined event may be an alarm, emergency event, or maintenance event associated with the simulated engineering project. In the example of the simulation of an integrated gasification combined cycle power plant, a predefined event may be triggered, for example, based on the degradation of one or more components of the power plant as the operation of the power plant is simulated.

It will be appreciated that a wide variety of predetermined events may be defined as desired in certain embodiments of the invention and triggered once the one or more threshold conditions for the event have been satisfied. It will also be appreciated that many different types of threshold conditions may be established for predefined events such as, for example, threshold conditions associated with the simulation timer and/or threshold conditions associated with the values of one or more parameters or variables associated with the simulated engineering project.

If it is not determined at block 840 that one or more predefined events have been triggered, then operations may continue at block 815 and the execution of the training simulation may continue. If, however, it is determined at block 840 that one or more predefined events have been triggered, then operations may continue at block 845 and the predefined event may be executed. The execution of the predefined event may be operable to alter or adjust various parameters of the simulated engineering project. In this regard, training challenges may be presented to a trainee utilizing the training simulator. Additionally, a variety of suitable output devices such as, for example, a graphical display may be utilized to output data to a trainee or other user associated with the execution of the predefined event.

At block 850, user input may be received in response to the execution of the one or more predefined events. Any number of suitable devices may be utilized as desired in certain embodiments of the invention to receive user input such as, for example, a keyboard, a mouse, a touchpad, a selectable display, etc. In this regard, a trainee may respond to an executed predefined event in an attempt to maintain proper operating conditions for the simulated engineering project. For example, a trainee may adjust the operations of one or more of the simulated components of the engineering project. As another example, a trainee may schedule maintenance and/or repair for the simulated engineering project. As yet another example, a trainee may shut down the simulated engineering project.

At block 855, a determination may be made as to whether the predefined event can be closed. Certain predefined events may have alarms associated with them and/or conditions that must be met before the predefined event may be closed. It will be appreciated that predefined events are not required to have alarms and/or conditions that must be met before the predefined event can be closed. For predefined events with these alarms and/or conditions, a determination may be made at block 855 as to whether the alarm may be closed and/or whether the conditions for closing the event have been satisfied or met.

If it is determined at block 855 that the predefined event may be closed, then the predefined event can be closed at block 860 and operations may continue at block 815. If, however, it is determined at block 855 that the predefined event can not be closed, then operations may continue at block 865. If there are no closing conditions associated with a predefined event, then operations may continue at block 815. Additionally, it will be appreciated that some alarms do not need to be closed. In such a situation, operations may continue at block 815.

At block 865, a determination may be made as to whether a failure associated with the underlying simulated engineering project has occurred such as, for example, a condition that would require the shutting down of the engineering project. If it is determined at block 865 that a failure has not occurred, then operations may continue at block 850 and additional user input may be received in response to the predefined event. If, however, it is determined at block 865 that a failure has occurred, then the method 800 may end.

It will be appreciated that the operation described above with reference to the method 800 shown in FIG. 8 do not necessarily have to be performed in the order set forth in FIG. 8, but instead may be performed in any suitable order. Additionally, it will be understood that, in certain embodiments of the invention, more or less than all of the operations set forth in FIG. 8 may be performed. It will also be appreciated that a training simulation may also perform many of the same operations performed by an engineering simulation including pausing, saving, restoring, and resuming a simulation. For example, the training simulator may periodically save a training simulation during its execution, which may also be referred to a saving a snapshot of the training simulation. These saved or captured snapshots may be subsequently loaded to resume the training simulation or to initiate a new training simulation.

The invention is described with reference to block diagrams of systems, methods, apparatuses and computer program products according to an embodiment of the invention. It will be understood that each block of the block diagrams, and combinations of blocks in the block diagrams, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create means for implementing the functionality of each block of the block diagrams, or combinations of blocks in the block diagrams discussed in detail in the descriptions below.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational elements to be performed on the computer or other programmable apparatus to produce a computer implemented process such that the instructions that execute on the computer or other programmable apparatus provide elements for implementing the functions specified in the block or blocks.

Accordingly, blocks of the block diagrams support combinations of means for performing the specified functions, combinations of elements for performing the specified functions and program instruction means for performing the specified functions. It will also be understood that each block of the block diagrams, and combinations of blocks in the block diagrams, can be implemented by special purpose hardware-based computer systems that perform the specified functions or elements, or combinations of special purpose hardware and computer instructions.

Embodiments of the invention may be implemented through an application program running on an operating system of a computer. The embodiments also may be practiced with other computer system configurations, including hand-held devices, multiprocessor systems, microprocessor based or programmable consumer electronics, mini-computers, mainframe computers, etc.

Application programs that are components of embodiments of the invention may include routines, programs, components, data structures, etc. that implement certain abstract data types, perform certain tasks, actions, or tasks. In a distributed computing environment, the application program (in whole or in part) may be located in local memory, or in other storage. In addition, or in the alternative, the application program (in whole or in part) may be located in remote memory or in storage to allow for the practice of the inventions where tasks are performed by remote processing devices linked through a communications network.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention will now be defined by the following numbered clauses:
1. A method for providing a training simulator for an engineering project, comprising:
   providing a simulator operable to simulate the engineering project, wherein the simulator includes at least one component operable to simulate a control system that controls one or more operations associated with the engineering project; and
   incorporating a training simulator component into the simulator, wherein the training simulator component is operable to facilitate providing the training of personnel on suitable operation of the engineering project.
2. The method of Clause 1, wherein providing a simulator comprises:
   providing a plurality of networked computers operable to execute respective software components, wherein the respective software components facilitate the simulation of respective components of the engineering project; and
   associating a respective memory with each of the plurality of networked computers, wherein each of the respective memories is operable to store simulation data associated with the engineering project and that is shared among the plurality of networked computers.
3. The method of any preceding Clause, further comprising:
   initiating a training simulation of the engineering project by initiating the training simulator component and by initiating the execution of the respective software components, wherein the training simulator utilizes the at least one component operable to simulate the control system; and
      managing the training simulation based at least in part on synchronizing the execution of the training simulator component and the respective software components, and updating at least a portion of the shared simulation data stored in the respective memories.
4. The method of any preceding Clause, wherein initiating the training simulation further comprises initiating at least one simulation timer, and
   wherein synchronizing the execution of the training simulator component and the respective software components comprises synchronizing the execution of the training simulator component and the respective software components based at least in part on at least one value of the at least one simulation timer.
5. The method of any preceding Clause, wherein at least a portion of the respective software components facilitate the simulation of equipment associated with the engineering project.
6. The method of any preceding Clause, wherein the engineering project comprises an integrated gasification combined cycle power plant.
7. The method of any preceding Clause, wherein a number of computers included in the plurality of networked computers is scalable based at least in part on the engineering project that is simulated.
8. The method of any preceding Clause, wherein initiating a training simulation comprises initiating a training simulation based at least in part on one or more predetermined training simulation parameters.
9. The method of any preceding Clause, further comprising:
   receiving user input associated with the training simulation; and
   adjusting the execution of at least one of the respective software components based at least in part on the received user input.
10. The method of any preceding Clause, further comprising:
   storing at least one predefined event for the training simulation, wherein at least one predetermined condition is associated with the at least one predefined event;
   determining, during the training simulation, whether the at least predetermined condition is satisfied; and
   executing the at least one predefined event based at least in part on whether the at least one predetermined condition is satisfied.
11. A training simulator, comprising:
   a plurality of networked computers operable to execute respective software components, wherein the respective software components facilitate the simulation of respective components of the engineering project and the execution of a training simulator for the engineering project;
   a plurality of memory devices, wherein at least one respective memory device is associated with each of the plurality of networked computers, and wherein each of the memory devices is operable to store simulation data that is shared among the plurality of memory devices; and
   a manager operable to initiate a training simulation of the engineering project by initiating the execution of the respective software components by the plurality of networked computers and to manage the training simulation based at least in part on synchronizing the execution of the respective software components and updating at least a portion of the shared simulation data stored in the plurality of memory devices.
12. The training simulator of Clause 11, wherein the manager is operable to initiate a training simulator by initiating at least one simulation timer, and
   wherein the manager is operable to synchronize the execution of the respective software components based at least in part on at least one value of the at least one simulation timer.
13. The training simulator of Clause 11 or 12, wherein at least a portion of the respective software components facilitate the simulation of equipment associated with the engineering project.
14. The training simulator of any of Clauses 11 to 13, wherein the engineering project comprises an integrated gasification combined cycle power plant.
15. The training simulator of any of Clauses 11 to 14, wherein a number of computers included in the plurality of networked computers is scalable based at least in part on the engineering project that is simulated.
16. The training simulator of any of Clauses 11 to 15, wherein the manager is operable to initiate a training simulation based at least in part on one or more predetermined training simulation parameters.
17. The training simulator of any of Clauses 11to 16, further comprising:
   one or more input devices that facilitate the receipt of user input associated with the training simulation, and
   wherein the execution of at least one of the respective software components is adjusted based at least in part on received user input.
18. The training simulator of any of Clauses 11 to 17, further comprising:
   a memory associated with the manager operable to store at least one predefined event for the training simulation, wherein at least one predetermined condition is associated with the at least one predefined event,
   wherein the manager is further operable to determine, during the training simulation, whether the at least predetermined condition is satisfied and to execute the at least one predefined event based at least in part on whether the at least one predetermined condition is satisfied.
19. A system for providing a training simulator for an engineering project, comprising:
   an engineering simulator operable to simulate the engineering project, wherein the simulator includes at least one component operable to simulate a control system that controls one or more operations of the engineering project; and
   a training simulator component that is provided as an extension of the engineering simulator,
   wherein the training simulator component is operable to facilitate providing the training of personnel on suitable operation of the engineering project.
20. The system of Clause 19, wherein the engineering simulator comprises:
   a plurality of networked computers operable to execute respective software components, wherein the respective software components facilitate the simulation of respective components of the engineering project and the execution of a training simulator for the engineering project;
      a plurality of memory devices, wherein at least one respective memory device is associated with each of the plurality of networked computers, and wherein each of the memory devices is operable to store simulation data that is shared among the plurality of memory devices; and
      a manager operable to initiate a training simulation of the engineering project by initiating the execution of the respective software components by the plurality of networked computers and to manage the training simulation based at least in part on synchronizing the execution of the respective software components and updating at least a portion of the shared simulation data stored in the plurality of memory devices.

## Claims

1. A method for providing a training simulator (325) for an engineering project, comprising:
providing a simulator operable to simulate the engineering project, wherein the simulator includes at least one component operable to simulate a control system (320) that controls one or more operations associated with the engineering project; and
incorporating a training simulator component (325) into the simulator,
wherein the training simulator component (325) is operable to facilitate providing the training of personnel on suitable operation of the engineering project.

2. The method of Claim 1, wherein providing a simulator comprises:
providing a plurality of networked computers (122-146) operable to execute respective software components, wherein the respective software components facilitate the simulation of respective components of the engineering project; and
associating a respective memory (205, 210, 215) with each of the plurality of networked computers (122-146), wherein each of the respective memories (205, 210, 215) is operable to store simulation data associated with the engineering project and that is shared among the plurality of networked computers.

3. The method of any preceding Claim, further comprising:
initiating a training simulation (325) of the engineering project by initiating the
training simulator (325) component and by initiating the execution of the respective
software components, wherein the training simulator (325) utilizes the at least one
component operable to simulate the control system (320); and
managing the training simulation based at least in part on synchronizing the execution of the training simulator (325) component and the respective software components, and updating at least a portion of the shared simulation data stored in the respective memories.

4. The method of any preceding Claim, wherein initiating the training simulation further comprises initiating at least one simulation timer, and
wherein synchronizing the execution of the training simulator (325) component and the respective software components comprises synchronizing the execution of the training simulator (325) component and the respective software components based at least in part on at least one value of the at least one simulation timer.

5. The method of any preceding Claim, wherein at least a portion of the respective software components facilitate the simulation of equipment associated with the engineering project.

6. The method of any preceding Claim, wherein the engineering project comprises an integrated gasification combined cycle power plant.

7. The method of any preceding Claim, wherein a number of computers included in the plurality of networked computers (117, 118, 122-146) is scalable based at least in part on the engineering project that is simulated.

8. The method of any preceding Claim, wherein initiating a training simulation comprises initiating a training simulation based at least in part on one or more predetermined training simulation parameters.

9. The method of any preceding Claim, further comprising:
receiving user input associated with the training simulation; and
adjusting the execution of at least one of the respective software components based at least in part on the received user input.

10. The method of any preceding Claim, further comprising:
storing at least one predefined event for the training simulation, wherein at least one predetermined condition is associated with the at least one predefined event;
determining, during the training simulation, whether the at least predetermined condition is satisfied; and
executing the at least one predefined event based at least in part on whether the at least one predetermined condition is satisfied.
